Europäisches Patentamt

European Patent Office

Office européen des brevets

(19)

(11) Numéro de publication: **0 072 295**
A2

## (12) DEMANDE DE BREVET EUROPEEN

(21) Numéro de dépôt: **82401412.0**

(22) Date de dépôt: **29.07.82**

(51) Int. Cl.³: **F 02 D 19/08**

(30) Priorité: **03.08.81 FR 8115040**

(71) Demandeur: **SOCIETE AUXILIAIRE DE REPARATIONS MECANIQUES S.A.R.M., 19 rue du Pont V, F-76600 Le Havre Seine Maritime (FR)**

(43) Date de publication de la demande: **16.02.83 Bulletin 83/7**

(72) Inventeur: **Ledru, Jean Pierre Georges, Turretot, F-76280 Criquetot (FR)**

(84) Etats contractants désignés: **AT BE CH DE GB IT LI LU NL SE**

(74) Mandataire: **Madeuf, René Louis et al, Cabinet Madeuf 3, Avenue Bugeaud, F-75116 Paris (FR)**

(54) Dispositif d'alimentation en combustible pour moteurs diesel, notamment de faible et moyenne puissance.

(57) Le dispositif pour alimenter un moteur diesel en combustible mélangé comporte un réservoir à gas-oil 1 et un réservoir à fuel lourd 2 qui alimentent, par des pompes doseuses 14, 15 un réservoir de mélange fin comportant un élément de réchauffage 32. Le mélange réchauffé est ensuite amené au moteur 11 par des batteries de filtre 24, 25 et 28, 29. Une dérivation 30 permet l'alimentation du moteur 11 uniquement en gas-oil.

**EP 0 072 295 A2**

ACTORUM AG

Dispositif d'alimentation en combustible pour moteurs diesel, notamment de faible et moyenne puissance.

La présente invention concerne un nouveau dispositif d'alimentation en combustible pour les moteurs diesel de faible et moyenne puissance, c'est-à-dire des moteurs dont la puissance s'étage entre 100 et environ 1 500 CV et qui sont utilisés notamment pour la propulsion d'embarcations fluviales.

Jusqu'à présent, les moteurs diesel utilisés dans l'application ci-dessus sont alimentés en gas-oil qui est un combustible dont le prix a crû de façon considérable au cours des dernières années de sorte que les frais de combustible sont devenus élevés dans les transports fluviaux.

Pour les types de moteurs auxquels l'invention se réfère, il n'était pas possible d'utiliser d'autres combustibles, notamment des fuels lourds, car ceux-ci sont extrêmement chargés d'impuretés diverses et leur viscosité est très importante, notamment par temps froid. Par ailleurs, ils encrassent rapidement les filtres, ce qui fait que leur utilisation est généralement réservée à des installations fixes, notamment à des chaufferies d'ensembles industriels.

La présente invention, par sa mise en oeuvre, rend possible l'utilisation de fuels lourds dans une forte proportion du combustible consommé par des moteurs diesel pour être montés sur des véhicules, notamment ceux rappelés ci-dessus, ce qui permet de réduire sensiblement les frais de combustible.

Conformément à l'invention, le dispositif d'alimentation en combustibles mélangés pour moteurs diesel, dans lequel on prévoit au moins un réservoir à gas-oil et un réservoir à fuel lourd, est caractérisé en ce qu'on prévoit un réservoir de mélange alimenté par des pompes doseuses, d'une part, en gas-oil et, d'autre part, en fuel lourd, le réservoir de mélange étant relié à l'alimentation du moteur diesel par une vanne trois voies comportant au moins un organe de commande faisant que le moteur est alimenté au démarrage en gas-oil pur, puis en mélange de gas-oil et de fuel éventuellement et de nouveau en gas-oil avant son arrêt.

Diverses autres caractéristiques de l'invention ressortent d'ailleurs de la description détaillée qui suit.

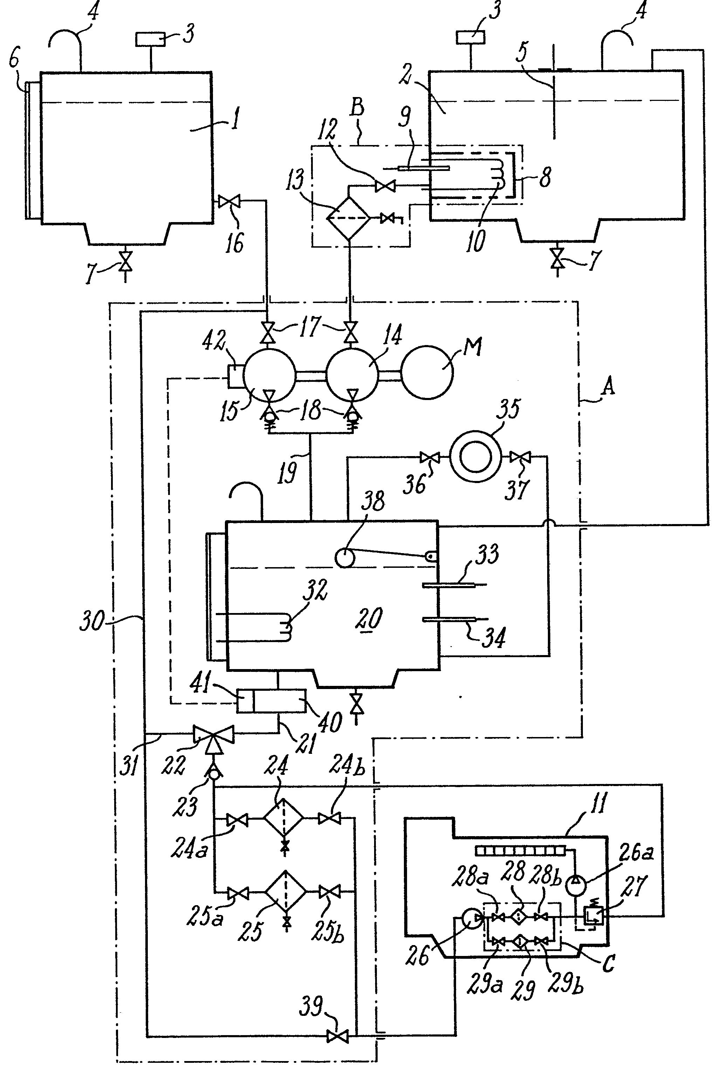

Une forme de réalisation de l'objet de l'invention est représentée, à titre d'exemple non limitatif, au dessin annexé.

La figure unique est un plan en partie schématique du dispositif d'alimentation en combustible pour moteurs diesel selon l'invention.

Le dispositif représenté au dessin comporte deux réservoirs 1 et 2 ou groupes de réservoirs 1 et 2. Le réservoir 1 est destiné à contenir du gas-oil, notamment du gas-oil de qualité désignée par "diesel-oil" en terminologie internationale. Le réservoir 2 est destiné à contenir du fuel lourd, notamment du fuel lourd, numéro 2, ou le fuel lourd No 2 BTS (basse teneur en soufre).

Les réservoirs 1 et 2 sont munis d'une façon habituelle de dispositifs de remplissage 3 ainsi que d'évents 4 et de jauges 5 à commande manuelle ou 6 à vision directe. Des vannes de vidange 7 sont aussi normalement prévues. Le réservoir 2 est associé à une chambre auxiliaire 8 qui est représentée à l'intérieur du réservoir mais qui pourrait être disposée à l'extérieur. La chambre auxiliaire 8 est en communication avec l'intérieur du réservoir 2 pour être toujours remplie et elle comporte une sonde de température 9 ainsi qu'un dispositif de réchauffage 10.

Le dispositif de réchauffage 10 peut être constitué par une résistance électrique ou un échangeur de chaleur parcouru par un fluide à refroidir par exemple le liquide de refroidissement du moteur diesel 11. Plusieurs échangeurs 10 peuvent, le cas échéant, être prévus, ces échangeurs étant par exemple parcourus par de l'huile ou par une fraction des gaz d'échappement de ce moteur diesel, une résistance électrique n'étant alors prévue qu'en tant qu'élément de réchauffage d'appoint.

Le fuel lourd provenant de la chambre auxiliaire 8 est amené par une vanne 12 et une crépine ou filtre grossier 13 à une pompe doseuse 14.

Le gas-oil contenu dans le réservoir 1 est amené à une seconde pompe doseuse 15 par l'intermédiaire d'une vanne 16. Des vannes de protection 17 sont également prévues immédiatement en amont des pompes doseuses 14 et 15. L'entraînement des pompes doseuses 14 et 15 est assuré par un moteur M, par exemple un moteur électrique.

La sortie des pompes doseuses 14 et 15 est munie de clapets anti-retour tarés 18 qui mènent à une canalisation unique 19 conduisant à un réservoir de mélange 20 constituant aussi un réservoir-tampon.

La sortie 21 du réservoir de mélange 20 est reliée par une vanne trois voies 22 et un clapet anti-retour 23 à un jeu de deux filtres 24, 25 montés en parallèle et respectivement isolés en amont par des vannes 24a, 25a et en aval par des vannes 24b, 25b. La sortie des filtres 24, 25 est reliée à une pompe d'alimentation 26 pour le moteur diesel 11. La pompe 26 est elle-même reliée à la pompe d'injection 26a du moteur diesel, mais par un jeu de deux filtres fins 28, 29 disposés en parallèle et protégés en amont par des vannes 28a, 29a et en aval par des vannes 28b, 29b. Une soupape de sûreté 27 est aussi prévue en amont de la pompe

4                      0072295

d'injection 26a.

L'entrée des filtres 28 et 29 est reliée par une conduite
30 à la sortie du réservoir 1 en aval de la vanne 16 de
sortie de celui-ci. La conduite 30 est également reliée
à la vanne trois voies 22 par une dérivation 31.

Le réservoir de mélange 20 comporte un élément réchauffeur
32 analogue au dispositif de réchauffage 10 décrit dans
ce qui précède et deux sondes de température 33 et 34.
La sonde de température 33 est prévue pour commander la
vanne trois voies 22 ainsi qu'un épurateur à centrifugeuse 35 protégé par des vannes 36, 37 et monté pour
puiser le combustible à la base du réservoir 20 et le
restituer à la partie supérieure. La sonde de température
34 est prévue pour commander l'élément réchauffeur 32
afin d'amener le combustible à une température compatible
avec le fonctionnement de la pompe d'alimentation 26 et
d'injection 26a du moteur 11.

Le réservoir 20 contient également un détecteur de niveau
38 qui commande la mise en et hors d'action du moteur M
d'entraînement des pompes doseuses 14 et 15.

Le dispositif fonctionne de la façon suivante :

Au démarrage du moteur 11, le mélange de fuel contenu
dans le réservoir 20 est froid et donc visqueux. La sonde
de température 33 fait commander la vanne trois voies
22 de façon que cette vanne mette en communication la
dérivation 31 avec la conduite 30, de sorte que la pompe
d'alimentation 26 du moteur est alimentée uniquement en
gas-oil, ce gas-oil passant par l'un des filtres 24 ou 25,
l'autre filtre étant protégé par ses vannes amont et aval
pour n'être mis en circuit qu'en cas de colmatage ou
autre incident.

Une vanne 39 est également prévue sur la conduite 30 pour permettre, éventuellement, de court-circuiter la vanne trois voies 22 en cas d'incident. Le gas-oil léger aspiré par la pompe d'alimentation 26 est amené à la pompe d'injection 26a en passant par l'un des filtres fins 28 ou 29, l'autre filtre fin étant maintenu en réserve par ses vannes amont et aval.

Lorsque le moteur tourne, l'élément réchauffeur 32 du réservoir 20 entre en action et il en est de même du dispositif de réchauffage 10 de la chambre auxiliaire 8. Lorsque la température du combustible dans le réservoir 20 atteint un seuil déterminé, la sonde de température 33 fait entraîner l'épurateur à centrifugeuse 35, ce qui a pour effet d'assurer la clarification du combustible du réservoir 20 et de l'homogénéiser si certaines fractions de combustible tendent à être décantées.

Au seuil d'entraînement de l'épurateur 35 ou, de préférence, à un seuil de température légèrement supérieur, la sonde de température 33 fait commander la vanne trois voies 22 pour interrompre l'alimentation directe en gas-oil provenant de la conduite 30 et y substituer l'alimentation en combustible provenant du réservoir de mélange 20.

Le dispositif de réchauffage 10 réchauffe simultanément le fuel lourd se trouvant dans  la chambre auxiliaire 8 jusqu'à l'amener à une viscosité suffisamment faible pour que ce fuel lourd puisse passer dans la crépine 13 et être dosé par la pompe 14.

Le dispositif de réchauffage 10 agit seulement dans la chambre auxiliaire 8 pour permettre un chauffage rapide d'une faible quantité de fuel lourd et pour éviter de devoir chauffer la quantité importante de fuel que contient le réservoir 2, cette quantité pouvant être de plusieurs milliers de litres. On réduit ainsi la quantité de chaleur consommée.

Dans la pratique, le réservoir de mélange 20 est un réservoir de faible volume par rapport aux réservoirs 1 et 2 également pour permettre une montée en température rapide et pour limiter la quantité d'énergie nécessaire à la montée en température.

La vanne trois voies 22 comporte également une commande manuelle permettant de la ramener dans la position pour laquelle le moteur 11 est alimenté uniquement en gas-oil à partir du réservoir 1 pendant un laps de temps quelconque précédant l'arrêt dudit moteur 11. De cette façon on assure le lavage des filtres 24 et/ou 25 en même temps que des filtres fins 28 et/ou 29 avant l'arrêt du moteur.

Le dessin illustre une caractéristique supplémentaire qu'il est possible de mettre en oeuvre. Suivant cette caractéristique, on dispose sur la sortie 21 du réservoir de mélange 20 un viscosimètre 40 qui commande par un relais 41 un dispositif de réglage 42 de la seconde pompe doseuse 15, c'est-à-dire la pompe dosant le gas-oil. De cette manière, la quantité de gas-oil peut toujours être réglée au minimum possible pour obtenir une viscosité constante à la sortie du réservoir de mélange 20.

L'invention n'est pas limitée à l'exemple de réalisation représenté et décrit en détail, car diverses modifications peuvent y être apportées sans sortir de son cadre. En particulier et comme l'illustre le dessin, certains groupes d'organes peuvent être pré-montés en usine pour permettre leur interchangeabilité facile ainsi que leur montage aisé sur le lieu d'utilisation par exemple un bateau auto-moteur. En particulier, l'ensemble réservoir 20, pompes doseuses 14, 15, épurateur à centrifugeuse 35, vanne à trois voies 22 et filtres 24, 25, peut être monté sur un plateau A tandis que l'ensemble chambre auxiliaire 8, dispositif de réchauffage 10, crépine 13, peut être monté en un bloc B et, finalement, l'ensemble filtres fins 28, 29 et leurs vannes peut être prévu sur un même support C pouvant être mis en place directement sur le moteur ou à proximité de celui-ci. Les différents ensembles peuvent aussi être réunis simplement par des conduites soit souples, soit rigides.

Revendications

1 - Dispositif d'alimentation en combustibles mélangés pour moteurs diesel dans lequel on prévoit au moins un réservoir à gas-oil et un réservoir à fuel lourd, caractérisé en ce qu'on prévoit un réservoir de mélange alimenté par des pompes doseuses, d'une part, en gas-oil et, d'autre part, en fuel lourd, le réservoir de mélange étant relié à l'alimentation du moteur diesel par une vanne trois voies comportant au moins un organe de commande faisant que le moteur est alimenté au démarrage en gas-oil pur, puis en mélange de gas-oil et de fuel et éventuellement de nouveau en gas-oil avant son arrêt.

2 - Dispositif suivant la revendication 1, caractérisé en ce que le réservoir de mélange est de faible capacité par rapport au réservoir de gas-oil et au réservoir de fuel lourd pour constituer un réservoir tampon, ledit réservoir de mélange comportant au moins un élément réchauffeur et des sondes de température commandant, d'une part, l'élément réchauffeur et, d'autre part, un épurateur à centrifugeuse dont la mise en action est concomitante ou précède la mise en action de la vanne trois voies amenant le mélange de combustible au moteur.

3 - Dispositif suivant l'une des revendications 1 et 2, caractérisé en ce que le mélange de combustible amené au moteur par la vanne trois voies passe par deux jeux de deux filtres disposés en parallèle et respectivement protégés par des vannes amont et des vannes aval, lesdits filtres étant lavés par du gas-oil pendant la phase de fonctionnement au gas-oil pur précédant l'arrêt du moteur.

4 - Dispositif suivant l'une des revendications 1 à 3, caractérisé en ce que l'un des jeux de filtres est disposé en amont d'une pompe d'alimentation tandis que l'autre jeu constitué par des filtres fins est constitué en aval de ladite pompe et immédiatement en amont de la pompe d'injection du moteur.

5 - Dispositif suivant l'une des revendications 1 à 4, caractérisé par une chambre auxiliaire disposée en communication avec le réservoir de fuel lourd, ladite chambre étant constamment remplie de fuel lourd et contenant un dispositif de réchauffage.

6 - Dispositif suivant l'une des revendications 1 à 5, caractérisé en ce que la chambre auxiliaire est de très faible volume par rapport au réservoir de fuel lourd et communique par une crépine ou filtre grossier avec l'entrée de la pompe doseuse de fuel lourd menant au réservoir de mélange.

7 - Dispositif suivant l'une des revendications 1 à 6, caractérisé en ce que les pompes doseuses de gas-oil et de fuel lourd sont reliées au réservoir de mélange par des clapets anti-retour tarés.

8 - Dispositif suivant l'une des revendications 1 à 7, caractérisé en ce que les pompes doseuses sont mises en action en dépendance d'un détecteur de niveau disposé dans le réservoir de mélange.

9 - Dispositif suivant l'une des revendications 1 à 8, caractérisé par une conduite de dérivation reliant directement le réservoir de gas-oil à la pompe d'alimentation du moteur, ladite conduite de dérivation étant contrôlée par une vanne particulière.

10 - Dispositif suivant l'une des revendications 1 à 9, caractérisé par un viscosimètre disposé à la sortie du réservoir de mélange, ledit viscosimètre étant associé à un relais pour commander le débit de l'une des pompes doseuses en dépendance de la viscosité du mélange à la sortie dudit réservoir de mélange.

0072295

1 / 1